# FASCICULE DE BREVET EUROPEEN

(11) **EP 1 808 573 B1**
(45) Date de publication et mention de la délivrance du brevet: **07.08.2013**
(21) Numéro de dépôt: 07100274.5
(22) Date de dépôt: 09.01.2007
(51) Int. Cl.: F01D 5/02, F16F 15/32

(54) **Masselotte d'équilibrage, disque de rotor en étant équipé, rotor et moteur d'aéronef les comportant**
Ausgleichsgewicht und Rotorscheibe, Rotor und Flugtriebwerk mit solchem Ausgleichsgewicht
Balancing mass and rotor disc, rotor and aircraft engine comprising such a mass

(30) Priorité: 13.01.2006 FR 0650125
(43) Date de publication de la demande: 18.07.2007
(73) Titulaire: SNECMA, 75015 Paris (FR)
(72) Inventeur: Dezouche, Laurent, Gilles, 91830 Coudray Montceau (FR)
(74) Mandataire: Ahner, Philippe

(56) Documents cités:
- EP-A- 1 052 424
- FR-A- 2 358 545
- US-A- 5 018 943
- US-A1- 2005 191 181

## Description

### DOMAINE TECHNIQUE

La présente invention se rapporte au domaine technique de l'équilibrage des rotors de turbomachines.

Elle vise plus particulièrement une masselotte d'équilibrage d'un rotor de turbomachine.

Elle vise aussi un disque d'un rotor de turbomachine équipé d'une telle masselotte.

Elle vise encore un rotor de turbomachine comportant un tel disque.

Elle vise enfin une turbomachine comportant un tel rotor. La turbomachine peut être notamment un moteur d'aéronef.

Dans tout ce qui suit, le terme « axial » se rapporte à une direction axiale de la turbomachine, le terme « longitudinal » se rapporte à une direction longitudinale de la masselotte d'équilibrage, tandis que le terme « transversal » est utilisé pour une direction transversale de la turbomachine ou de la masselotte d'équilibrage.

### ÉTAT DE LA TECHNIQUE ANTÉRIEURE

Il est connu d'utiliser des masselottes d'équilibrage pour équilibrer un rotor de turbomachine. De telles masselottes sont par exemple décrites dans les documents US 2005/191 181 et EP 1 739 324. De manière classique, un rotor comporte plusieurs disques, et les masselottes d'équilibrage sont montées au niveau des deux disques aval du rotor, qui sont des disques portant des aubes amovibles.

La figure 1 représente une masselotte d'équilibrage de la technique antérieure. Les figures 2, 3, et 4 illustrent un rotor de turbomachine doté de telles masselottes d'équilibrage connues.

Sur la figure 2 est représenté en coupe axiale un rotor 110 de turbomachine, et plus particulièrement deux disques 112, 132 correspondant à deux étages N, N-1 successifs de ce rotor 110.

A la périphérie du disque 112 de l'étage N, sont réparties des alvéoles 114 qui reçoivent chacune le pied 116 d'une aube amovible 118. Une masselotte d'équilibrage 160 est disposée dans un intervalle 120 ménagé entre deux pieds d'aube 116, 116' successifs. De manière analogue, à la périphérie du disque 132 de l'étage N-1, sont réparties des alvéoles 134 qui reçoivent chacune le pied 136 d'une aube amovible 138. Une masselotte d'équilibrage 180 est disposée dans un intervalle 140 ménagé entre deux pieds d'aube 136, 136' successifs.

De manière connue, les masselottes d'équilibrage 160, 180 sont positionnées dans les intervalles 120, 140, de telle manière que deux faces actives 156 de chaque masselotte 160, 180 soit en contact avec deux flancs actifs 104 de l'alvéole 114, 134 correspondante, par effet centrifuge lorsque le rotor 110 est entraîné en rotation.

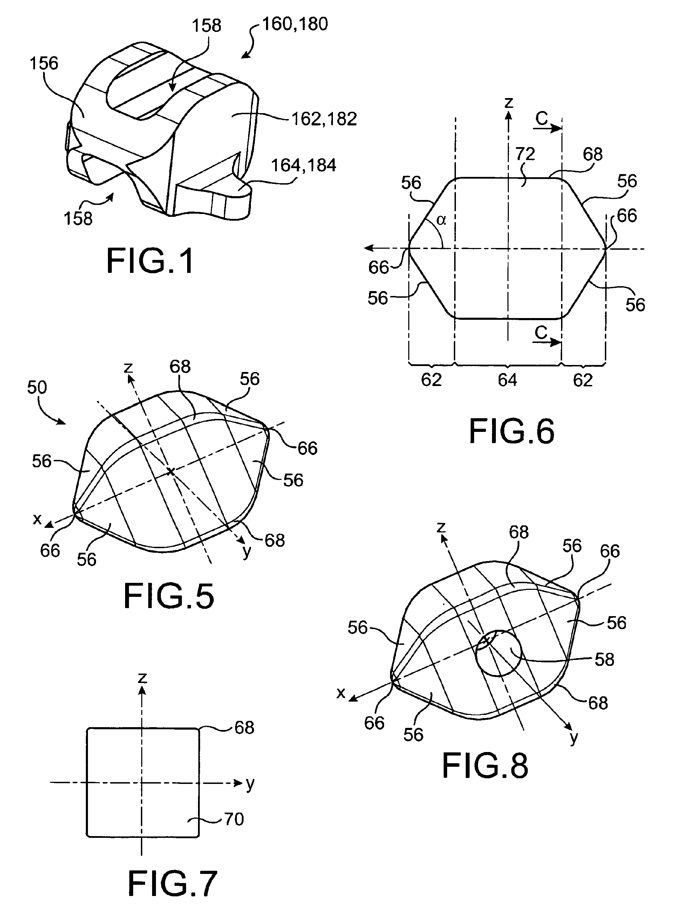

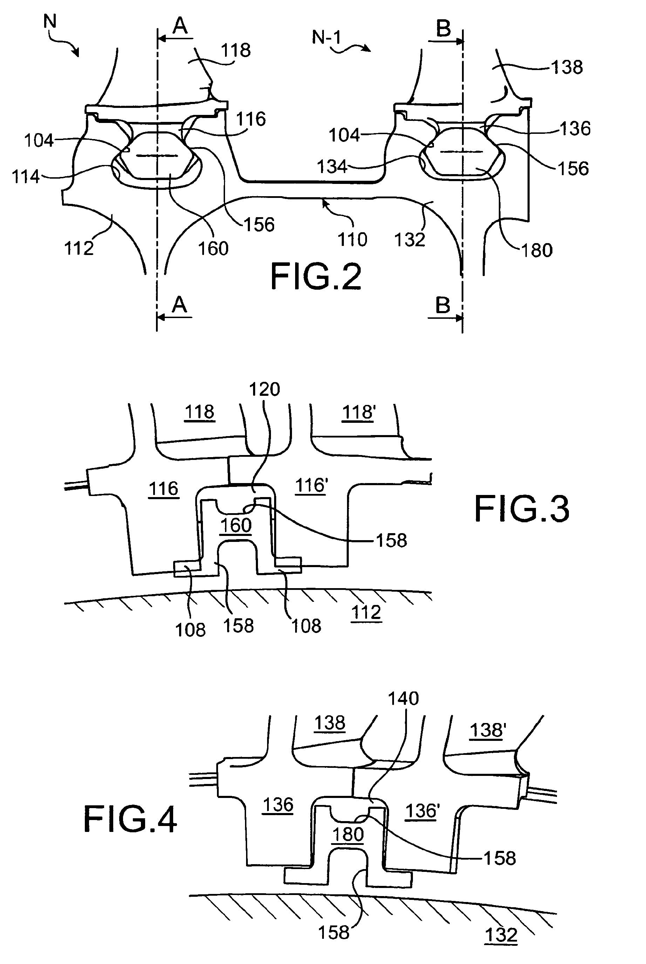

Toutes les masselottes 160 du disque 114 de l'étage N sont identiques entre elles. De manière analogue, toutes les masselottes 180 du disque 134 de l'étage N-1 sont identiques entre elles. Une masselotte d'équilibrage 160, 180 typique de la technique antérieure est représentée en perspective sur la figure 1. Un référentiel orthogonal local (X, Y, Z) lui est associé. Elle possède un corps 162, 182, qui présente des évidements 158 réalisé par usinage, afin d'optimiser sa masse. Elle présente également deux pattes de détrompage 184, qui s'étendent vers l'extérieur à partir du corps 182 suivant la direction transversale Y. Ces pattes de détrompage 184 ne viennent pas en contact contre les pieds 136, 136' des aubes 138, 138' entre lesquelles la masselotte 180 est disposée, comme illustré sur la figure 4. Les pattes de détrompage 184 permettent d'éviter d'éventuelles erreurs de montage qui pourraient conduire à une dégradation des disques 132.

La figure 4 représente une vue en coupe transversale suivant la ligne B-B de la figure 2, du disque 132 de l'étage N-1 du rotor 110 de la figure 2, montrant plus particulièrement deux aubes amovibles adjacentes 138, 138' ayant respectivement des pieds d'aubes 136, 136', et une masselotte d'équilibrage 180 d'étage N-1 disposée dans l'intervalle 140 ménagé entre les pieds d'aube 136, 136'.

Lorsque la masselotte 180 est en place entre les deux pieds d'aube 136, 136', le plan (X, Z) de la masselotte 180 se trouve confondu avec le plan de coupe axiale qui est le plan de la figure 2, et le plan (Y, Z) de la masselotte 180 se trouve confondu avec le plan de coupe transversal qui est le plan de la figure 4. En d'autres termes, lorsque la masselotte 180 est en place entre les deux pieds d'aube 136, 136', son axe X est parallèle à la direction axiale de la turbomachine, et ses axes Y et Z définissent un plan parallèle à un plan transversal de la turbomachine.

La figure 3 représente une vue en coupe transversale suivant la ligne A-A de la figure 2, du disque 112 de l'étage N du rotor 110 de la figure 2, montrant plus particulièrement deux aubes amovibles adjacentes 118, 118' ayant respectivement des pieds d'aubes 116, 116' .

Du fait qu'ils appartiennent à deux étages N, N-1 différents, les deux disques 112, 132 présentent des alvéoles 114, 134 ayant des dimensions différentes, notamment suivant leur direction radiale. En effet, il apparaît sur les figures 2, 3 et 4 que la dimension radiale de l'alvéole 134 du disque 132 de l'étage N-1 (à droite sur la figure 2) est inférieure à la dimension radiale de l'alvéole 114 du disque 112 de l'étage N (à gauche sur la figure 2). Par conséquent, il est nécessaire de prévoir des masselottes 160, 180 ayant des formes et/ou des dimensions légèrement différentes selon qu'elles sont destinées au disque 112 de l'étage N ou au disque 132 de l'étage N-1 du rotor 110.

Cette situation est illustrée sur la figure 3, qui montre une masselotte d'équilibrage 180 adaptée pour le disque 132 de l'étage N-1, placée entre les deux pieds d'aube 116, 116' successifs. Du fait que les alvéoles 114, 134 des deux disques 112, 132 ont des dimensions différentes, la masselotte 180 adaptée pour le disque 132 de l'étage N-1 n'est pas adaptée pour le disque 112 de l'étage N, comme illustré par des zones de chevauchement 108 des pattes de détrompage 184 avec les pieds d'aube 116, 116'. Si la masselotte d'équilibrage 180 d'étage N-1 était disposée dans l'intervalle 120 d'étage N de manière à éviter un tel chevauchement, alors ses faces actives 156 ne seraient pas en contact avec les flancs actifs 104 de l'alvéole 114 lors de la rotation du disque 112.

Par conséquent, il s'avère impossible de placer des masselottes 180 identiques dans les alvéoles 114, 134 de deux disques 112, 132 différents, lorsque ces masselottes ont la géométrie de la masselotte 180 illustrée sur la figure 1.

### EXPOSÉ DE L'INVENTION

Un but de la présente invention est de proposer une masselotte d'équilibrage ayant une forme et des dimensions telles qu'elle puisse être placée indifféremment dans les alvéoles d'un disque d'un étage N et dans les alvéoles d'un disque d'un étage N-1.

Un autre but de la présente invention est de proposer une masselotte d'équilibrage ayant une forme et des dimensions telles qu'elle puisse être placée correctement dans l'alvéole sans qu'il soit besoin de prévoir des reliefs de détrompage.

Les buts ci-dessus et d'autres buts sont atteints avec une masselotte d'équilibrage selon l'invention.

Selon un premier aspect, l'invention se rapporte à une masselotte d'équilibrage d'un rotor de turbomachine selon la revendication 1.

Selon une caractéristique, ladite masselotte d'équilibrage présente des arêtes arrondies et des sommets arrondis.

Selon une caractéristique, ladite masselotte d'équilibrage présente un évidement. De préférence, ledit évidement se présente sous la forme d'un trou traversant orienté selon une direction perpendiculaire audit axe longitudinal.

Selon un mode de réalisation préféré, lesdits polygones sont des polygones à quatre côtés, de sorte que chaque partie d'extrémité présente une forme de pyramide à quatre faces et que la partie intermédiaire présente une forme de parallélépipède.

Selon une variante du mode de réalisation préféré, lesdits polygones à quatre côtés sont des rectangles.

Selon une autre variante, préférée, du mode de réalisation préféré, lesdits polygones à quatre côtés sont des carrés.

Selon cette variante préférée, ladite masselotte d'équilibrage comporte huit faces actives qui sont les huit faces des deux parties d'extrémité.

Selon un deuxième aspect, l'invention se rapporte à un disque de rotor d'une turbomachine, doté d'au moins une masselotte d'équilibrage selon le premier aspect.

En particulier, ledit disque de rotor d'une turbomachine comporte des alvéoles dans lesquelles sont insérés des pieds d'aubes entre lesquels est ménagé un intervalle suivant une direction tangentielle du disque, et lesdites alvéoles ont deux flancs actifs.

Ledit disque de rotor est caractérisé en ce qu'il est doté d'au moins une masselotte d'équilibrage selon le premier aspect disposée dans ledit intervalle.

De préférence, ladite masselotte d'équilibrage comporte deux faces actives disposées chacune sur l'une des parties d'extrémité.

De préférence, ces deux faces actives sont symétriques l'une de l'autre par rapport à un plan médian de symétrie perpendiculaire à un axe longitudinal qui relie les deux sommets (66) de la masselotte (50).

De préférence, lesdites faces actives sont destinées à venir en contact respectivement avec l'un des flancs actifs de l'alvéole lorsque ledit disque de rotor est entraîné en rotation.

Selon un troisième aspect, l'invention se rapporte à un rotor de turbomachine comportant une masselotte d'équilibrage selon le premier aspect et/ou un disque de rotor selon le deuxième aspect de l'invention.

Selon un quatrième aspect, l'invention se rapporte à une turbomachine comportant une masselotte d'équilibrage selon le premier aspect et/ou un disque de rotor selon le deuxième aspect et/ou un rotor selon le troisième aspect de l'invention. En particulier, la turbomachine est un moteur d'aéronef.

### BRÈVE DESCRIPTION DES DESSINS

L'invention sera mieux comprise à la lecture de la description détaillée qui va suivre d'un mode de réalisation de l'invention, donné à titre illustratif et nullement limitatif, en référence aux dessins annexés, dans lesquels:
- la figure 1, déjà décrite, représente, en vue en perspective, une masselotte d'équilibrage conforme à la technique antérieure ;
- la figure 2, déjà décrite, représente, en coupe axiale, deux étages successifs d'un rotor de turbomachine, munis de masselottes d'équilibrage selon la technique antérieure ;
- la figure 3, déjà décrite, est une vue en coupe transversale le long de la ligne A-A de la figure 2 ;
- la figure 4, déjà décrite, est une vue en coupe transversale le long de la ligne B-B de la figure 2 ;
- la figure 5 est une vue en perspective d'une masselotte d'équilibrage selon l'invention ;
- la figure 6 est une autre vue en coupe longitudinale d'une masselotte d'équilibrage selon l'invention ;
- la figure 7 est une autre vue en coupe transversale le long de la ligne C-C de la figure 6 d'une masselotte d'équilibrage selon l'invention ;
- la figure 8 est une vue analogue à la figure 5, pour une variante de réalisation de la masselotte d'équilibrage selon l'invention ;

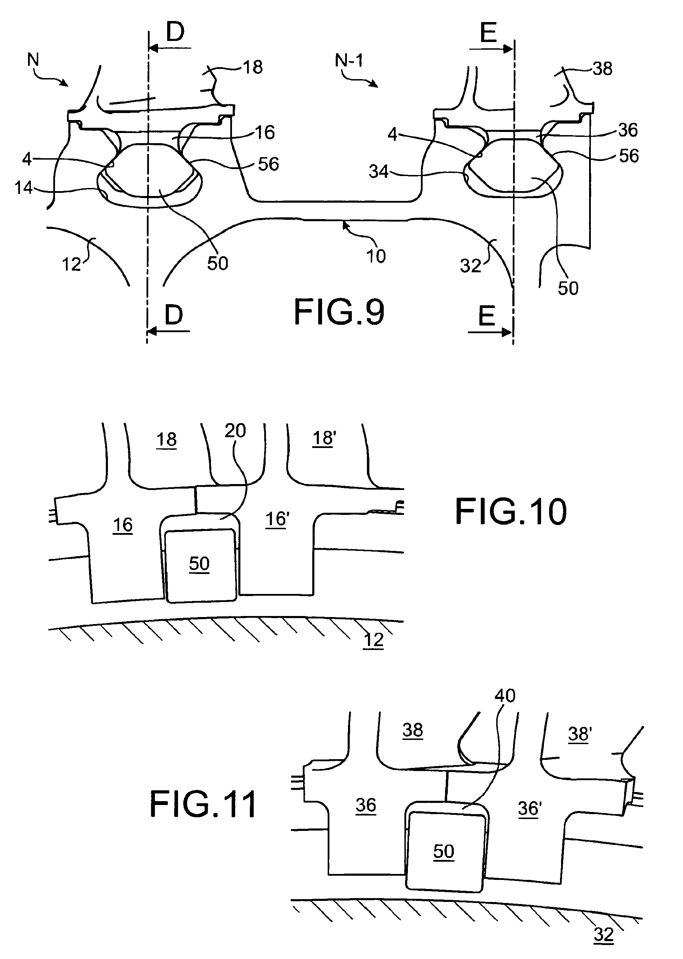

- la figure 9 représente, en coupe axiale, deux étages successifs d'un rotor de turbomachine, munis de masselottes d'équilibrage selon l'invention ;
- la figure 10 est une vue en coupe transversale le long de la ligne D-D de la figure 9 ;
- la figure 11 est une vue en coupe transversale le long de la ligne E-E de la figure 9 ;

### EXPOSÉ DÉTAILLÉ D'UN MODE DE RÉALISATION PARTICULIER

En se référant tout d'abord à la figure 5, il est représenté, en vue en perspective, une masselotte d'équilibrage 50 selon l'invention. Celle-ci présente globalement une forme oblongue s'étendant le long d'un axe longitudinal X. Un référentiel orthogonal local (X, Y, Z) lui est associé de telle sorte que le plan (Y, Z) soit un plan transversal médian de la masselotte d'équilibrage 50 et que le plan (Z, X) soit un plan longitudinal, perpendiculaire au plan médian (Y, Z).

La masselotte d'équilibrage 50 est représentée en coupe suivant le plan longitudinal (X, Z) sur la figure 6. Elle comporte trois parties successives, à savoir deux parties d'extrémité 62 raccordées l'une à l'autre par une partie intermédiaire 64. Les deux parties d'extrémité 62 présentent chacune une forme de pyramide ayant une base 70, un sommet 66 et quatre faces 56. La partie intermédiaire 64 présente une forme de parallélépipède ayant quatre faces 72 de mêmes dimensions. La partie intermédiaire 64 relie les deux bases 70 des deux parties d'extrémité, de manière continue et régulière, parallèlement à l'axe longitudinal X sur lequel sont alignés les deux sommets 66. Les faces 72 de la partie intermédiaire 64 sont dans le prolongement des faces 56 respectives des parties d'extrémité 62.

La masselotte d'équilibrage 50 présente des sections transversales, perpendiculaires à l'axe longitudinal X, ayant des formes carrées, comme illustré sur la figure 7 qui montre la masselotte d'équilibrage 50 en coupe suivant un plan transversal (Y, Z) correspondant à la ligne C-C de la figure 6, à la jonction entre la partie intermédiaire 64 et l'une des partie d'extrémité 62. Les axes Y et Z sont positionnés de telle sorte qu'il passent chacun par les centres de deux faces 72 opposées de la partie intermédiaire 64.

Entre ses différentes faces 56, 72, la masselotte d'équilibrage 50 présente de préférence des arêtes arrondies. Elle présente aussi de préférence des sommets 66 arrondis.

L'inclinaison des faces 56 des parties d'extrémité 62 est définie par un angle α, dont la valeur est établie en fonction des besoins. Cet angle α est compris dans une plage allant de 30 degrés à 60 degrés, de préférence dans une plage allant de 40 degrés à 55 degrés. De manière encore plus préférée, la valeur de l'angle α est établie à 45°.

Un avantage d'une masselotte d'équilibrage 50 ayant la forme qui vient d'être décrite réside dans le fait qu'elle présente plusieurs plans de symétrie, et conserve un même contour dans le plan longitudinal (Z, X) lorsqu'elle est pivotée de 90 degrés autour de l'axe longitudinal X.

La figure 8 montre une variante de réalisation de la masselotte d'équilibrage 50. Celle-ci présente un évidement 58, réalisé de préférence par usinage, afin de modifier et/ou d'optimiser sa masse. Sur l'exemple illustré, l'évidement 58 se présente sous la forme d'un trou traversant 58 orienté perpendiculairement à l'axe longitudinal X et passant par l'un ou l'autre des axes transversaux Y ou Z. La forme et la position de l'évidement 58 n'affectent pas le contour de la masselotte d'équilibrage 50 lorsqu'elle est vue dans l'un ou l'autre des plans transversaux (X, Y) ou (Z, X).

Un avantage de l'invention réside dans le fait qu'il est prévu une forme et des dimensions uniques pour toutes les masselottes d'équilibrage 50, quel que soit le disque 12, 32 sur lequel elles sont destinées à être installées. Cela permet de simplifier la fabrication des masselottes d'équilibrage, et de réduire les coûts de cette fabrication.

La masselotte d'équilibrage selon l'invention est réalisée de préférence en un matériau choisi dans le groupe constitué par les alliages base nickel, les alliages base titane, les alliages base aluminium et les aciers.

Sur la figure 9 est représenté en coupe axiale un rotor 10 de turbomachine conforme à l'invention, et plus particulièrement deux disques 12, 32 correspondant à deux étages N, N-1 successifs de ce rotor 10.

Des alvéoles 14 qui reçoivent chacune le pied 16 d'une aube amovible 18 sont réparties à la périphérie du disque 12 de l'étage N. Une masselotte d'équilibrage 50 conforme à l'invention est disposée dans un intervalle 20 ménagé entre deux pieds 16 successifs. De manière analogue, des alvéoles 34 qui reçoivent chacune le pied 36 d'une aube amovible 38 sont réparties à la périphérie du disque 32 de l'étage N-1. Une masselotte d'équilibrage 50 conforme à l'invention est disposée dans un intervalle 40 ménagé entre deux pieds 36 successifs.

La figure 10 représente une vue en coupe transversale suivant la ligne D-D de la figure 9, du disque 32 de l'étage N du rotor 10 de la figure 9, montrant plus particulièrement deux aubes amovibles adjacentes 18, 18' ayant respectivement des pieds d'aubes 16, 16', et une masselotte d'équilibrage 50 disposée dans l'intervalle 20 ménagé entre ceux-ci.

De manière analogue, la figure 11 représente une vue en coupe transversale suivant la ligne E-E de la figure 9, du disque 32 de l'étage N-1 du rotor 10 de la figure 9, montrant plus particulièrement deux aubes amovibles adjacentes 38, 38' ayant respectivement des pieds d'aubes 36, 36', et une masselotte d'équilibrage 50 disposée dans l'intervalle 40 ménagé entre ceux-ci.

Toutes les masselottes 160 du disque 114 de l'étage N sont identiques entre elles. De manière analogue, toutes les masselottes 180 du disque 134 de l'étage N-1 sont identiques entre elles. De plus, les masselottes 50 disposées dans le disque d'étage N (figure 10 et partie gauche de la figure 9) sont identiques aux masselottes d'équilibrage 50 disposées dans le disque d'étage N-1 (figure 11 et partie droite de la figure 9).

Les masselottes d'équilibrage 50, 50 sont positionnées entre deux pieds d'aube 16, 16', 36, 36' successifs dans l'intervalle 20, 40 (figures 10, 11), de telle manière que deux faces actives 56, 56 de chaque masselotte 50 soient en contact avec deux flancs actifs 4, 4 de l'alvéole 14, 34 correspondante, par effet centrifuge lorsque le rotor 10 est entraîné en rotation (figure 9). Les deux faces actives 56, 56 qui viennent en contact avec les flancs actifs 4, 4 de l'alvéole 14, 34 correspondante sont symétrique l'une de l'autre par rapport au plan médian de symétrie (Y, Z) de la masselotte d'équilibrage 50. Comme le montrent plus particulièrement les figures 10 et 11, les intervalles 20, 40 ont sensiblement une forme carrée dans un plan transversal du disque 12, 32. En choisissant un polygone à quatre côtés égaux, c'est-à-dire un carré, pour définir la section de la partie intermédiaire 64, on prévient une rotation éventuelle de la masselotte d'équilibrage 50 ne se déplace pas en rotation autour de son axe longitudinal X une fois qu'elle est en place dans l'alvéole 14, 34. Par suite, les risques de blesser l'alvéole 14, 34 et ou la masselotte 50 sont réduits. Ces risques sont encore réduits du fait que la masselotte d'équilibrage 50 est dotée d'arêtes 68 arrondies et de sommets 66 arrondis.

Du fait de sa forme particulière ayant deux plan de symétrie longitudinaux (Y, Z) et (Z, X), chaque masselotte d'équilibrage 50 peut être disposée dans l'intervalle 20, 40 sans qu'il soit nécessaire de prévoir un sens d'introduction particulier et/ou des reliefs de détrompage. En effet, toutes les faces 56 des parties d'extrémité 62 sont identiques. Elles peuvent donc toutes remplir le rôle de face active venant en contact avec un flanc actif 4, 4 de l'alvéole 14, 34 correspondante. Par conséquent, une même forme de masselotte d'équilibrage peut être envisagée pour tous les disques d'un rotor qui doivent être équilibrés. Il suffit de choisir les dimensions de la masselotte d'équilibrage commune de telle sorte qu'elle puisse entrer dans l'alvéole qui a la plus faible dimension radiale, c'est-à-dire l'alvéole 34 du disque 32 d'étage N-1, à droite sur la figure 9. Par conséquent, une telle masselotte d'équilibrage 50 procure un gain de temps au moment du montage des disques 12, 32.

L'invention n'est pas limitée au mode de réalisation précédemment décrit. En particulier, le nombre de faces de chaque pyramide n'est pas limité à quatre.

## Revendications

1. Masselotte d'équilibrage (50) d'un rotor (10) de turbomachine, **caractérisée en ce qu'**elle est sans reliefs de détrompage, consistant en deux parties d'extrémité (62) en forme de pyramide ayant chacune une base (70) et un sommet (66), et une partie intermédiaire (64) qui relie entre elles les deux bases (70) des parties d'extrémité (62), lesdits deux sommets (66) étant alignés sur un axe longitudinal (X) et ladite masselotte comportant un plan de symétrie (Y, Z) perpendiculaire à l'axe longitudinal (X), et **en ce que** les deux parties d'extrémité (62) et la partie intermédiaire (64) présentent, en coupe selon un plan (Y, Z) perpendiculaire audit axe longitudinal (X), des sections ayant des formes de polygones centrées sur ledit axe longitudinal (X).

2. Masselotte d'équilibrage (50) selon la revendication 1, **caractérisée en ce qu'**elle présente un évidement (58).

3. Masselotte d'équilibrage (50) selon la revendication 2, **caractérisée en ce que** ledit évidement (58) se présente sous la forme d'un trou traversant orienté selon une direction perpendiculaire à un axe longitudinal (X) qui relie les deux sommets (66).

4. Masselotte d'équilibrage (50) selon la revendication 3, **caractérisée en ce que** lesdits polygones sont des polygones à quatre côtés, de sorte que chaque partie d'extrémité (62) présente une forme de pyramide à quatre faces et que la partie intermédiaire (64) présente une forme de parallélépipède.

5. Masselotte d'équilibrage (50) selon la revendication 4, **caractérisée en ce que** lesdits polygones à quatre côtés sont des rectangles.

6. Masselotte d'équilibrage (50) selon la revendication 4, **caractérisée en ce que** lesdits polygones à quatre côtés sont des carrés.

7. Masselotte d'équilibrage (50) selon la revendication 6, **caractérisée en ce qu'**elle présente huit faces actives (56) qui sont les huit faces (56) des deux parties d'extrémité (62).

8. Masselotte d'équilibrage (50) selon l'une quelconque des revendications 1 à 7, **caractérisée en ce qu'**elle présente des arêtes arrondies et des sommets arrondis.

9. Masselotte d'équilibrage (50) selon l'une quelconque des revendications 1 à 8, **caractérisée en ce qu'**elle est réalisée dans un matériau choisi dans le groupe constitué par les alliages base nickel, les alliages base titane, les alliages base aluminium et les aciers.

10. Disque de rotor d'une turbomachine, **caractérisé en ce qu'**il est doté d'au moins une masselotte d'équilibrage (50) selon l'une quelconque des revendications 1 à 9.

11. Disque de rotor selon la revendication 10, **caractérisé en ce que** ledit disque (12, 32) comporte des alvéoles (14, 34) dans lesquelles sont insérés des pieds d'aubes (16, 16', 36, 36') entre lesquels est ménagé un intervalle (20, 40) suivant une direction tangentielle du disque (12, 32), lesdites alvéoles (14, 34) ayant deux flancs actifs (4, 4), ledit disque étant doté d'au moins une masselotte d'équilibrage (50) selon l'une quelconque des revendications 1 à 9 disposée dans ledit intervalle (20, 40).

12. Disque de rotor (12, 32) selon la revendication 11, **caractérisé en ce que** ladite masselotte d'équilibrage (50) comporte deux faces actives (56, 56) disposées sur l'une des parties d'extrémité (62).

13. Disque de rotor (12, 32) selon la revendication 12, **caractérisé en ce que** lesdites faces actives (56, 56) sont destinées à venir en contact respectivement avec l'un des flancs actifs (4, 4) de l'alvéole (114, 134) lorsque ledit disque de rotor (112, 132) est entraîné en rotation.

14. Rotor (10) de turbomachine, **caractérisé en ce qu'**il comporte au moins un disque de rotor (12, 32) selon l'une quelconque des revendications 10 à 13.

15. Turbomachine, **caractérisée en ce qu'**elle comporte au moins une masselotte d'équilibrage (50) selon l'une quelconque des revendications 1 à 9.

16. Turbomachine, **caractérisée en ce qu'**elle comporte au moins un disque de rotor (12, 32) selon l'une quelconque des revendications 10 à 13.

17. Moteur d'aéronef, **caractérisé en ce qu'**elle comporte au moins une masselotte d'équilibrage (50) selon l'une quelconque des revendications 1 à 9.

18. Moteur d'aéronef, **caractérisé en ce qu'**elle comporte au moins un disque de rotor (12, 32) selon l'une quelconque des revendications 10 à 13.

## Patentansprüche

1. Ausgleichsgewicht (50) eines Turbomaschinen-Rotors (10),
**dadurch gekennzeichnet,**
**dass** es keine Unverwechselbarkeitsreliefs aufweist und aus zwei pyramidenförmigen Endstücken (62) mit jeweils einer Basis (70) und einer Spitze (66) sowie aus einem Mittelstück (64), das die beiden Basen (70) der Endstücke (62) miteinander verbindet, besteht, wobei die beiden genannten Spitzen (66) auf einer Längsachse (X) ausgerichtet sind und dieses Ausgleichsgewicht eine Symmetrieebene (Y, Z) im rechten Winkel zu der Längsachse (X) aufweist, und dass die beiden Endstücke (62) und das Mittelstück (64) in einer Schnittebene (Y, Z), die im rechten Winkel zu der genannten Längsachse (X) verläuft, Abschnitte in polygonaler Form aufweisen, die auf dieser Längsachse (X) zentriert sind.

2. Ausgleichsgewicht (50) nach Anspruch 1,
**dadurch gekennzeichnet,**
**dass** es eine Aussparung (58) aufweist.

3. Ausgleichsgewicht (50) nach Anspruch 2,
**dadurch gekennzeichnet,**
**dass** diese Aussparung (58) in der Form eines durchgehenden Lochs vorhanden ist, das in einem rechten Winkel zu der genannten Längsachse (X) ausgerichtet ist, die die beiden Spitzen (66) verbindet.

4. Ausgleichsgewicht (50) nach Anspruch 3,
**dadurch gekennzeichnet,**
**dass** die genannten Polygone vierseitige Polygone sind, dergestalt, dass jedes Endstück (62) eine Pyramidenform mit vier Seiten aufweist und das Mittelstück (64) eine Quaderform aufweist.

5. Ausgleichsgewicht (50) nach Anspruch 4,
**dadurch gekennzeichnet,**
**dass** diese vierseitigen Polygone Rechtecke sind.

6. Ausgleichsgewicht (50) nach Anspruch 4,
**dadurch gekennzeichnet,**
**dass** diese vierseitigen Polygone Quadrate sind.

7. Ausgleichsgewicht (50) nach Anspruch 6,
**dadurch gekennzeichnet,**
**dass** es acht aktive Seiten (56) aufweist, welche die acht Seiten (56) der beiden Endstücke (62) sind.

8. Ausgleichsgewicht (50) nach einem der Ansprüche 1 bis 7,
**dadurch gekennzeichnet,**
**dass** es abgerundete Kanten und abgerundete Spitzen aufweist.

9. Ausgleichsgewicht (50) nach einem der Ansprüche 1 bis 8,
**dadurch gekennzeichnet,**
**dass** es aus einem Werkstoff hergestellt ist, der aus der Gruppe der Legierungen auf Nickelbasis, der Legierungen auf Titanbasis, der Legierungen auf Aluminiumbasis und der Stähle gewählt wird.

10. Rotorscheibe einer Turbomaschine,
**dadurch gekennzeichnet,**
**dass** sie mit mindestens einem Ausgleichsgewicht (50) nach einem der Ansprüche 1 bis 9 ausgerüstet ist.

11. Rotorscheibe nach Anspruch 10,
**dadurch gekennzeichnet,**
**dass** diese Scheibe (12, 32) Aufnahmezellen (14, 34) aufweist, in die Schaufelfiiße (16, 16', 36, 36') eingesetzt sind, zwischen denen in tangentialer Richtung der Scheibe (12, 32) ein Zwischenraum (20, 40) vorgesehen ist, wobei die Aufnahmezellen (14, 34) zwei Arbeitsflanken (4, 4) haben, wobei diese Scheibe mit mindestens einem Ausgleichsgewicht (50) nach einem der Ansprüche 1 bis 9 ausgerüstet ist, das in diesem Zwischenraum (20, 40) angeordnet ist.

12. Rotorscheibe (12, 32) nach Anspruch 11,
**dadurch gekennzeichnet,**
**dass** dieses Ausgleichsgewicht (50) zwei Arbeitsflanken (56, 56) aufweist, die auf einem der Endstücke (62) angeordnet sind.

13. Rotorscheibe (12, 32) nach Anspruch 12,
**dadurch gekennzeichnet,**
**dass** diese Arbeitsflanken (56, 56) dazu bestimmt sind, jeweils in Kontakt mit einer der Arbeitsflanken (4, 4) der Aufnahmezelle (114, 134) zu kommen, wenn diese Rotorscheibe (112, 132) in Drehbewegung versetzt wird.

14. Rotor (10) einer Turbomaschine,
**dadurch gekennzeichnet,**
**dass** er mindestens eine Rotorscheibe (12, 32) nach einem der Ansprüche 10 bis 13 aufweist.

15. Turbomaschine,
**dadurch gekennzeichnet,**
**dass** sie mindestens ein Ausgleichsgewicht (50) nach einem der Ansprüche 1 bis 9 aufweist.

16. Turbomaschine,
**dadurch gekennzeichnet,**
**dass** sie mindestens eine Rotorscheibe (12, 32) nach einem der Ansprüche 10 bis 13 aufweist.

17. Triebwerk für Luftfahrzeuge,
**dadurch gekennzeichnet,**
**dass** es mindestens ein Ausgleichsgewicht (50) nach einem der Ansprüche 1 bis 9 aufweist.

18. Triebwerk für Luftfahrzeuge,
**dadurch gekennzeichnet,**
**dass** es mindestens eine Rotorscheibe (12, 32) nach einem der Ansprüche 10 bis 13 aufweist.

## Claims

1. A balancing flyweight (50) of a turbomachine rotor (10), **characterized in that** it is without locating protrusions consisting of two pyramid-shaped end parts (62) each one having a base (70) and an apex (66), and an intermediate part (64) which connects the two bases (70) of the end parts (62) together, said two apexes (66) being aligned on a longitudinal axis (X) and said fly weight comprising a plane of symmetry (Y, Z) perpendicular to said longitudinal axis (X), and **in that** the two end parts (62) and the intermediate part (64) exhibit, in cross-section through a plane (Y, Z) perpendicular to said longitudinal axis (X), cross-sections having polygonal shapes centered on said longitudinal axis (X).

2. The balancing flyweight (50) as claimed in claim 1, wherein it exhibits a hollow (58).

3. The balancing flyweight (50) as claimed in claim 2, wherein said hollow (58) is in the form of a traversing hole oriented in a direction perpendicular to a longitudinal axis (X) which connects the two apexes (66).

4. The balancing flyweight (50) as claimed in claim 3, wherein said polygons are four-sided polygons, such that each end part (62) has the shape of a pyramid with four faces and such that the intermediate part (64) has the shape of a parallelepiped.

5. The balancing flyweight (50) as claimed in claim 4, wherein said four-sided polygons are rectangles.

6. The balancing flyweight (50) as claimed in claim 4, wherein said four-sided polygons are squares.

7. The balancing flyweight (50) as claimed in claim 6, wherein it has eight active faces (56) which are the eight faces (56) of the two end parts (62).

8. The balancing flyweight (50) as claimed in any one of claims 1 to 7, wherein it has rounded edges and rounded apexes.

9. The balancing flyweight (50) as claimed in any one of claims 1 to 8, wherein it is made from a material chosen from the group constituted by nickel-based alloys, titanium-based alloys, aluminum-based alloys and steels.

10. A rotor disk of a turbomachine, wherein it is provided with at least one balancing flyweight (50) as claimed in any one of claims 1 to 9.

11. A rotor disk (12, 32) as claimed in claim 10, **characterized in that** said disk (12, 32), comprising cells (14, 34) in which are inserted blade roots (16, 16', 36, 36') between which is formed a gap (20, 40) in a direction tangential to the disk (12, 32), and said cells (14, 34) having two active sides (4, 4), said disk being provided with at least one balancing flyweight (50) as claimed in any one of claims 1 to 9 disposed in said gap (20, 40).

12. Rotor disk (12, 32) as claimed in claim 11, wherein said balancing flyweight (50) comprises two active faces (56, 56) disposed on one of the end parts (62).

13. The rotor disk (12, 32) as claimed in claim 12, wherein said active faces (56, 56) are intended to respectively come into contact with one of the active sides (4, 4) of the cell (114, 134) when said rotor disk (112, 132) is driven in rotation.

14. A turbomachine rotor (10), wherein it comprises at least one rotor disk (12, 32) as claimed in any one of claims 10 to 13.

15. A turbomachine, wherein it comprises at least one balancing flyweight (50) as claimed in any one of claims 1 to 9.

16. The turbomachine, wherein it comprises at least one rotor disk (12, 32) as claimed in any one of claims 10 to 13.

17. An aircraft engine, wherein it comprises at least one balancing flyweight (50) as claimed in any one of claims 1 to 9.

18. The aircraft engine, wherein it comprises at least one rotor disk (12, 32) as claimed in any one of claims 10 to 13.
